# EUROPÄISCHE PATENTANMELDUNG

(11) **EP 4 682 487 A1**
(43) Veröffentlichungstag der Anmeldung: **21.01.2026**
(21) Anmeldenummer: 24189355.1
(22) Anmeldetag: 18.07.2024
(51) Int. Cl.: G01J 3/02, G01J 3/10, G01J 3/28, G01J 3/50

(54) **FARBMESSSYSTEM UND VERFAHREN FÜR ORTSAUFGELÖSTE SPEKTRALE FARBMESSUNGEN EINER STRUKTURIERTEN UND BEDRUCKTEN OBERFLÄCHE**

(71) Anmelder: IPAC Improve Process Analytics and Control GmbH, 9524 Villach (AT)
(72) Erfinder: Sallinger, Christian, 9500 Villach (AT)
(74) Vertreter: Cohausz & Florack

(57) **Zusammenfassung**

Die Erfindung betrifft ein Farbmesssystem (2) für ortsaufgelöste spektrale Farbmessungen einer bedruckten Oberfläche (4), insbesondere einer strukturierten und bedruckten Oberfläche (4) eines Trägermaterials (6), mit einer ortsaufgelösten spektralen Messeinrichtung (8), mit einer ersten Beleuchtungseinrichtung (10), wobei die ortsaufgelöste spektrale Messeinrichtung (8) eine Messebene (12) mit einem linearen Messbereich (14) auf der Oberfläche (4) aufspannt, wobei die ortsaufgelöste spektrale Messeinrichtung (8) eingerichtet ist, vom linearen Messbereich (14) ausgehende Lichtreflexionen spektral zu messen, wobei die erste Beleuchtungseinrichtung (10) eingerichtet ist, einen ersten Beleuchtungsbereich (16) auf der Oberfläche (4) unter einem ersten Beleuchtungswinkel zur Messebene (12) zu beleuchten und wobei der erste Beleuchtungsbereich (16) linienförmig ist, dadurch gekennzeichnet, dass das Farbmesssystem (2) mindestens eine zweite Beleuchtungseinrichtung (18) aufweist, dass die mindestens eine zweite Beleuchtungseinrichtung (18) eingerichtet ist, mindestens einen zweiten Beleuchtungsbereich (20) auf der Oberfläche (4) unter mindestens einem zweiten Beleuchtungswinkel zur Messebene (12) zu beleuchten, und dass der mindestens eine zweite Beleuchtungsbereich (20) linienförmig ist. Die Erfindung betrifft auch ein Verfahren für ortsaufgelöste spektrale Farbmessungen einer bedruckten Oberfläche (4). Die Erfindung löst das technische Problem, die ortsaufgelöste spektrale Farbmessung von strukturierten und bedruckten Oberflächen zu verbessern.

## Beschreibung

Die Erfindung betrifft ein Farbmesssystem für ortsaufgelöste spektrale Farbmessungen einer bedruckten Oberfläche, insbesondere einer strukturierten Oberfläche eines Trägermaterials, mit einer ortsaufgelösten spektralen Messeinrichtung, mit einer ersten Beleuchtungseinrichtung, wobei die ortsaufgelöste spektrale Messeinrichtung eine Messebene mit einem linearen Messbereich auf der Oberfläche aufspannt, wobei die ortsaufgelöste spektrale Messeinrichtung eingerichtet ist, vom linearen Messbereich ausgehende Lichtreflexionen spektral zu messen, wobei die erste Beleuchtungseinrichtung eingerichtet ist, einen ersten Beleuchtungsbereich auf der Oberfläche unter einem ersten Beleuchtungswinkel zur Messebene zu beleuchten und wobei der erste Beleuchtungsbereich linienförmig ist.

Die Erfindung betrifft auch ein Verfahren zur ortsaufgelösten spektralen Farbmessung einer Oberfläche, insbesondere einer strukturierten Oberfläche.

Das genannte Verfahren betrifft im Allgemeinen den Bereich der spektralen Farbmessung von gedruckten Oberflächen, deren Design durch eine Oberflächenstruktur ergänzt wird. Somit tragen nicht nur die Farben der gedruckten Oberfläche, sondern auch unterschiedliche Reflexionswinkel zum optischen Erscheinungsbild bei.

In der Druckindustrie ist eines der wesentlichen Ziele die Erzeugung möglichst gleicher Bild- und Farbeneindrücke der zu bedruckenden Materialien. Die sogenannte Farbkonstanz auch beim Druck unterschiedlicher Chargen auf unterschiedlichen Trägermaterialien soll möglichst immer gleich aussehen. Dies gilt insbesondere dann, wenn Corporate Identity gewünscht ist. Die von einer Firma gewählte Farbe bzw. gewählten Farben sollen immer gleich aussehen, unabhängig davon, ob auf Glas, Papier, Kunststoff oder einem anderen Trägermaterial gedruckt wird. Das möglichst identische Aussehen der Druckprodukte ist gewünscht und somit ein Ziel der Druckindustrie.

Druckverfahren, Drucker, Druckfarbe und vor allem das Trägermaterial haben einen großen Einfluss darauf, wie ein Druckergebnis, das auf der Basis einer Druckdatei gedruckt worden ist, im ausgedruckten Zustand aussieht. Unter Druckfarbe wird jedes Druckmedium unter anderem wie Tinte oder Toner verstanden, mit dem Farbpigmente auf das Trägermaterial aufgebracht werden.

Dieselbe Druckdatei sieht im gedruckten Zustand auf einem glänzenden Papier anders aus als auf einem matten Papier. Ebenso beeinflusst der Unterschied von glatten Oberflächen zu rauen oder strukturierten Oberflächen das optische Ergebnis wesentlich. Während glänzende Ausdrucke über hohe Kontraste und gesättigte Farben verfügen, wirken matte doch deutlich kontrastärmer, weniger farbig und oft etwas warmtoniger. Diese Bildwirkung ist die Folge der unterschiedlichen Eigenschaften der verschiedenen Druckmaterialien und Druckverfahren. Je nach Untergrund wird das Druckergebnis Dekor oder Design genannt. Im Folgenden wird das Druckergebnis einheitlich Dekor genannt.

Gleichwohl soll eine möglichst gleiche Farbwirkung erreicht werden. Um den diversen Einflüssen durch Druckverfahren, Drucker, Druckfarbe und Trägermaterial gerecht zu werden, nutzt man die Möglichkeiten diverser Software-Tools und Programme in der Bildbearbeitung im Hinblick darauf, die Eigenschaften des Drucksystems bereits vor dem Druck durch eine geeignete Charakterisierung zu optimieren. Dieser Prozess wird insgesamt auch Farbmanagement genannt.

Die ortsaufgelöste Farbmessung bezieht sich auf die Erfassung von Farbinformationen über eine Oberfläche hinweg mit einer bestimmten räumlichen Auflösung. Anders als bei einer Punkt- oder Spotmessung, die nur die Farbe an einem einzelnen Punkt misst, ermöglicht die ortsaufgelöste Farbmessung die Erfassung von Farbdaten über ein bestimmtes Gebiet oder eine Fläche.

Es gibt verschiedene Techniken und Instrumente für die ortsaufgelöste Farbmessung.

Bei der Spektralbildgebung wird nicht nur die Farbe an verschiedenen Punkten einer Oberfläche erfasst, sondern auch das gesamte spektrale Reflexionsspektrum jedes Punktes. Die Spektralbildgebung ermöglicht eine detaillierte Analyse der Farbvariationen und kann in Anwendungen wie der Kunstrestaurierung, der Lebensmittelinspektion und der medizinischen Bildgebung eingesetzt werden.

Ähnlich wie die Spektralbildgebung erfasst die multispektrale Bildgebung Farbinformationen über verschiedene spektrale Bänder hinweg. Dies ermöglicht die Untersuchung spezifischer Farbmerkmale oder -eigenschaften und wird häufig in der Landwirtschaft, Umweltüberwachung und Fernerkundung eingesetzt.

Die Technik der hyperspektralen Bildgebung erfasst Farbdaten über Hunderte oder sogar Tausende von spektralen Bändern hinweg, was eine noch detailliertere Analyse der Materialzusammensetzung und Oberflächeneigenschaften ermöglicht. Sie findet Anwendung in Bereichen wie der Geologie, der Lebensmittelqualitätsprüfung und der Biomedizin.

Die ortsaufgelöste Farbmessung mit einer spektralen Messeinrichtung bietet eine leistungsstarke Möglichkeit, Farbdaten über komplexe Oberflächen hinweg zu erfassen und zu analysieren. Sie wird in verschiedenen Branchen und Anwendungen eingesetzt, um Farbvariationen zu charakterisieren, Produktqualität zu überprüfen und wissenschaftliche Erkenntnisse zu gewinnen.

Aus dem Stand der Technik sind als spektrale Messeinrichtungen das Farbmessungssystem (ACMSTM - Advanced Colour Measurement System) und ein Inline Farbmessungssystem (ICMSTM- Inline Colour Measurement System) der Firma ipac bekannt, die zur Farbbeurteilung mehrfärbiger Oberflächen eingesetzt werden. Das System weist jeweils einen spektralen, gegebenenfalls inline angeordneten Scanner auf, der für verschiedene Substrate, also Druckmedien bzw. Materialien (Papier, Folie, Holz, Kunststoff, Keramik, Mineralstoff) und verschiedene Druckverfahren (Digitaldruck, insbesondere Tintenstrahldruck oder Laserdruck, sowie Tiefdruck, Flexodruck, Offsetdruck oder Siebdruck) eingesetzt werden kann. Das ICMSTM und das ACMSTM nutzen eine spektrale ortsaufgelöste Scantechnologie zur Messung eines Druckbildes.

Die spektrale Messeinrichtung ist beispielsweise eine multispektrale Kamera mit einer Mehrzahl von Wellenlängenbändern, vorzugsweise mit 36 Wellenlängenbändern pro aufgenommenem Bildpunkt, die pro Wellenlängenband eine Farbinformation erzeugt. Somit entsteht pro aufgenommenem Bildpunkt (Pixel) ein Farbspektrum aus den Wellenlängenbändern. Eine übliche Sensortechnik besteht darin, auf einem CMOS-Sensor einzelne Pixel mit unterschiedlichen Farbfiltern zu versehen, so dass mit einer Bildaufnahme eine Mehrzahl von spektralen Informationen aus einem aufgenommenen Bildbereich aufgezeichnet werden können.

Die spektrale Messeinrichtung kann auch eine hyperspektrale Kamera sein, bei der pro Bildpunkt mittels einer optischen Einrichtung, beispielsweise mittels eines Prismas, das Licht spektral aufgespalten und somit einzelne spektrale Bereiche separat gemessen werden. Dadurch erhöht sich die spektrale Auflösung gegenüber einer multispektralen Kamera auf beispielsweise bis zu 350 oder mehr Wellenlängenbänder.

Im Gegensatz zu einer herkömmlichen RGB-Kamera wird somit pro Bildpunkt nicht nur eine Farbe, sondern eine spektrale Verteilung mit erheblich mehr Informationstiefe gewonnen. Ein Vergleich von Bildinformationen aus verschiedenen spektralen Aufnahmen wird dann mittels Software durchgeführt.

In dem technischen Umfeld der Farbmessung ist auch eine Mehrwinkelfarbmessung bekannt, die sich auf die Messung von Farben unter verschiedenen Beleuchtungswinkeln bezieht. Statt nur eine einzige Beleuchtungsrichtung zu verwenden, werden bei der Mehrwinkel-Farbmessung mehrere Beleuchtungswinkel verwendet, um ein umfassenderes Verständnis der Farbe eines Objekts zu erhalten.

Dieser Ansatz ist besonders nützlich, um Farbveränderungen bei verschiedenen Beleuchtungswinkeln zu verstehen, wie sie zum Beispiel in Automobil-, Druck- und Textilindustrie auftreten können. Durch die Berücksichtigung verschiedener Beleuchtungswinkel kann die Farbgenauigkeit verbessert und die Konsistenz über verschiedene Lichtverhältnisse hinweg sichergestellt werden.

In der Praxis werden bei der Mehrwinkel-Farbmessung oft spezielle Geräte wie Farbmessgeräte oder Spektrophotometer verwendet, die in der Lage sind, Farben aus verschiedenen Blickwinkeln zu analysieren und zu messen.

Die Farbmessung strukturierter Oberflächen stellt eine besondere Herausforderung dar, da die Struktur der Oberfläche das einfallende Licht beeinflusst und dadurch die wahrgenommene Farbe verändert. Dies ist besonders relevant für Materialien wie Textilien, lackierte Oberflächen, Kunststoffe oder bedruckte Materialien, bei denen die Oberfläche nicht glatt ist.

Bei der Messung von strukturierten Oberflächen müssen verschiedene Faktoren berücksichtigt werden.

Die Oberflächenstruktur kann dazu führen, dass das einfallende Licht gestreut, reflektiert oder absorbiert wird. Dadurch können Farbveränderungen und Glanzeffekte auftreten, die die Farbmessung beeinflussen.

Da strukturierte Oberflächen das einfallende Licht unterschiedlich reflektieren, können sich die Farben je nach Beleuchtungswinkel verändern. Daher ist es wichtig, Messungen aus verschiedenen Blickwinkeln durchzuführen, um ein umfassendes Verständnis der Farbe zu erhalten.

Für die Farbmessung strukturierter Oberflächen werden oft spezielle Messgeräte wie 3D-Scanner, Streulichtmessgeräte oder Goniofotometer verwendet, die in der Lage sind, die Oberflächenstruktur zu berücksichtigen und die Farbveränderungen zu quantifizieren.

Um genaue und reproduzierbare Messergebnisse zu erhalten, ist eine sorgfältige Kalibrierung der Messgeräte sowie die Einhaltung von standardisierten Messbedingungen entscheidend.

Durch die Berücksichtigung dieser Faktoren können Farbmessungen strukturierter Oberflächen präzise durchgeführt werden, was in verschiedenen Branchen wie der Automobil, Bekleidungs- und Druckindustrie wichtig ist.

Ein Goniometer ist ein Instrument, das verwendet wird, um den Winkel einer Oberfläche relativ zu einem Referenzpunkt oder einer Referenzebene zu messen. In der Farb- und Oberflächentechnologie wird ein Goniometer oft verwendet, um die Reflexionseigenschaften von Materialien zu analysieren, insbesondere bei strukturierten Oberflächen oder Materialien mit Glanzeffekten. Dabei gibt es verschiedene Arten von Goniometern, die für unterschiedliche Anwendungen entwickelt wurden.

Bidirektionale Goniometer messen die Reflexionseigenschaften von Materialien in zwei Richtungen: vom Beobachter zum Material und vom Material zum Beobachter. Sie werden häufig verwendet, um die Glanz- und Streuungseigenschaften von Oberflächen zu charakterisieren.

Multiwinkel-Goniometer ermöglichen die Messung der Reflexionseigenschaften von Materialien aus verschiedenen Blickwinkeln oder Beleuchtungswinkeln. Sie sind besonders nützlich für die Analyse von strukturierten Oberflächen, bei denen sich die Farbe je nach Blickwinkel ändern kann.

Ein Ellipsometer ist eine spezielle Art von Goniometer, das polarisiertes Licht verwendet, um die optischen Eigenschaften von Materialien, wie z. B. die Dicke und Brechungsindex von dünnen Schichten, zu messen.

Goniometer werden in verschiedenen Branchen eingesetzt, darunter die Materialwissenschaften, Oberflächenbeschichtungen, Halbleiterfertigung, Optik und Farbmetrik. Sie spielen eine wichtige Rolle bei der Charakterisierung und Kontrolle von Oberflächeneigenschaften sowie bei der Entwicklung und Qualitätssicherung von Materialien.

Grundsätzlich handelt es sich bei diesen Messgeräten um Punktmessgeräte.

Die Farbmessung mit einem Punktmessgerät bezieht sich auf die Erfassung der Farbe eines bestimmten Punktes oder einer kleinen Fläche auf einer Oberfläche. Diese Art der Messung kann bei einer Vielzahl von Anwendungen nützlich sein, insbesondere wenn es darum geht, die Farbe von Materialien oder Produkten genau zu bestimmen oder zu überprüfen.

Punktmessgeräte für die Farbmessung können verschiedene Technologien verwenden, darunter Spektrophotometer und Farbmessgeräte. Diese Geräte erfassen die Lichtreflexion von der Oberfläche des zu messenden Punktes und analysieren sie, um die Farbe in Form von Farbkoordinaten zu bestimmen, die oft in Standardfarbräumen wie CIE-Lab* oder CIE-LCh* ausgedrückt werden.

Die Farbmessung mit einem Punktmessgerät ermöglicht eine schnelle und präzise Erfassung der Farbe eines bestimmten Bereichs oder eines Punktes auf einer Oberfläche. Dies kann in verschiedenen Branchen und Anwendungen zur Qualitätskontrolle eingesetzt werden, um sicherzustellen, dass Produkte konsistente Farben haben und den Farbspezifikationen entsprechen. In der Druckindustrie wird die Farbmessung zur Farbabstimmung und Qualitätskontrolle von gedruckten Materialien wie Verpackungen, Etiketten, Broschüren oder anderen Materialien eingesetzt. In der Textilindustrie wird die Farbmessung eingesetzt zur Überprüfung der Farbechtheit von Textilien und zur Farbabstimmung bei der Produktion von Stoffen und Bekleidung. Schließlich wird in der Kosmetikindustrie die Farbmessung eingesetzt, um die Farbe von Make-up-Produkten wie Lippenstift, Lidschatten usw. zu messen und sicherzustellen, dass sie konsistent sind.

Die Farbmessung mit einem Punktmessgerät ist ein wichtiger Bestandteil vieler industrieller Prozesse, um eine gleichbleibende Farbqualität und Produktkonsistenz sicherzustellen.

Punktmessgeräte zur Farbmessung haben bestimmte Einschränkungen, die berücksichtigt werden müssen. Hier sind einige der wichtigsten Limitierungen:
Punktmessgeräte messen die Farbe nur an einem einzigen Punkt oder einer kleinen Fläche (z.B. 10-30 mm), was bedeutet, dass sie keine Informationen über die Farbvariationen innerhalb einer größeren Fläche liefern können. Dies kann zu ungenauen Ergebnissen führen, insbesondere wenn die Oberfläche nicht homogen ist oder starke Farbvariationen aufweist.

Obwohl Punktmessgeräte für viele Anwendungen geeignet sind, können sie nicht alle Anforderungen abdecken, insbesondere wenn eine hochauflösende ortsaufgelöste Farbmessung erforderlich ist oder wenn spezielle Anforderungen wie die Erfassung spektraler Informationen erforderlich sind.

Daher liegt der vorliegenden Erfindung die Aufgabe zugrunde, die ortsaufgelöste spektrale Farbmessung von strukturierten und bedruckten Oberflächen zu verbessern.

Das zuvor aufgeführte technische Problem wird erfindungsgemäß durch die Merkmale des Systemanspruchs 1 und/oder des Verfahrensanspruchs 11 gelöst.

Ein Verfahrensmerkmal offenbart dabei stets auch ein Merkmal des Systems, das zur Ausführung des Verfahrensmerkmals eingerichtet ist und umgekehrt.

Das Farbmesssystem für ortsaufgelöste spektrale Farbmessungen einer bedruckten Oberfläche, insbesondere einer strukturierten Oberfläche eines Trägermaterials weist eine ortsaufgelöste spektrale Messeinrichtung auf. Die ortsaufgelöste spektrale Messeinrichtung kann beispielsweise eine multispektrale oder eine hyperspektrale Messeinrichtung sein. Insbesondere kann die ortsaufgelöste spektrale Messeinrichtung eine spektrale Kamera sein, die eingerichtet ist, je ein Farbspektrum für mehrere Messpunkte auf der Oberfläche simultan aufzunehmen.

Das Farbmesssystem weist ferne eine erste Beleuchtungseinrichtung auf. Die erste Beleuchtungseinrichtung kann eine Lampe sein. Insbesondere folgt die erste Beleuchtungseinrichtung den Anforderungen der ISO Norm 13655, im Besonderen der Messbedingung M2. Vorzugsweise wird die genormte Beleuchtungsart D50 als erste Beleuchtungseinrichtung verwendet.

Die ortsaufgelöste spektrale Messeinrichtung spannt eine Messebene mit einem linearen Messbereich auf der Oberfläche auf. Der lineare Messbereich entspricht mehreren Messpunkten auf der Oberfläche, die reihenförmig oder linear angeordnet sind. Dabei sind die einzelnen Messpunkte bevorzugt in einer einzigen Reihe nebeneinander angeordnet. Eine solche Anordnung von Messpunkten ermöglicht eine simultane Messung von Farbspektren jedes Messpunkts.

Die ortsaufgelöste spektrale Messeinrichtung ist eingerichtet, vom linearen Messbereich ausgehende Lichtreflexionen spektral zu messen. Die von der ortsaufgelösten spektralen Messeinrichtung gemessenen Lichtreflektionen verlaufen dabei in der Messebene. Insbesondere ist die Messebene näherungsweise zweidimensional, wenn die ortsaufgelöste spektrale Messeinrichtung ausreichend weit von dem ausreichend schmalen Messbereich entfernt ist.

Die erste Beleuchtungseinrichtung ist eingerichtet, einen ersten Beleuchtungsbereich auf der Oberfläche unter einem ersten Beleuchtungswinkel zur Messebene zu beleuchten, wobei der erste Beleuchtungsbereich linienförmig ist. Der erste Beleuchtungsbereich kann insbesondere wenigstens so gestaltet sein, dass der erste Beleuchtungsbereich den linearen Messbereich größtenteils, vorzugsweise vollständig ausleuchten kann. Eine möglichst vollständige Beleuchtung des Messbereichs kann wünschenswert sein, um Lichtreflektionen auf der gesamten Fläche des Messbereichs herbeizuführen. Die erste Beleuchtungseinrichtung kann dafür seitlich der ortsaufgelösten spektralen Messeinrichtung angeordnet sein.

Ferner weist das Farbmesssystem mindestens eine zweite Beleuchtungseinrichtung auf. Die mindestens eine zweite Beleuchtungseinrichtung ist eingerichtet, mindestens einen zweiten Beleuchtungsbereich auf der Oberfläche unter mindestens einem zweiten Beleuchtungswinkel zur Messebene zu beleuchten, wobei der mindestens eine zweite Beleuchtungsbereich linienförmig ist. Der mindestens eine zweite Beleuchtungsbereich kann insbesondere wenigstens so gestaltet sein, dass der mindestens eine zweite Beleuchtungsbereich den linearen Messbereich größtenteils, vorzugsweise vollständig ausleuchten kann. Eine möglichst vollständige Beleuchtung des Messbereichs kann wünschenswert sein, um Lichtreflektionen auf der gesamten Fläche des Messbereichs herbeizuführen. Die mindestens eine zweite Beleuchtungseinrichtung kann dafür seitlich der ortsaufgelösten spektralen Messeinrichtung angeordnet sein.

Während die mindestens eine zweite Beleuchtungseinrichtung in der folgenden Diskussion stets bloß als eine Beleuchtungseinrichtung diskutiert wird, ist es möglich, weitere Beleuchtungseinrichtungen im Farbmesssystem anzuordnen. Dazu können die unterschiedlichen zweiten Beleuchtungseinrichtungen unabhängig voneinander verwendet werden oder sich gegenseitig ergänzen. Insbesondere ist eine Ausführungsform mit insgesamt drei Beleuchtungseinrichtungen, also einer ersten Beleuchtungseinrichtung und zwei zweiten Beleuchtungseinrichtungen, möglich. Dabei kann jede der zweiten Beleuchtungseinrichtungen individuell alle für die mindestens eine zweite Beleuchtungseinrichtung offenbarten Merkmale aufweisen.

Die mindestens eine zweite Beleuchtungseinrichtung kann den Messbereich aus einer anderen Richtung zur Messebene als die erste Beleuchtungseinrichtung ausleuchten. Dies hat zur Folge, dass eine strukturierte Oberfläche durch die Strukturierung bei Beleuchtung durch die mindestens eine zweite Beleuchtungseinrichtung ein anderes Farbspektrum in Richtung der ortsaufgelösten spektralen Messeinrichtung als bei einer Beleuchtung durch die erste Beleuchtungseinrichtung reflektiert. Ein starker Unterschied in zwei daraus resultierenden Farbspektren eines Messpunkts deutet dann daraufhin, dass eine Qualitätskontrolle in dem Messpunkt möglicher Weise nicht aussagekräftig ist, da das Farbspektrum messbar von dem Beleuchtungswinkel abhängt. Somit kann eine Qualitätskontrolle einer strukturierten Oberfläche verbessert werden, indem solche Messpunkte bei der Kontrolle nicht berücksichtigt werden.

In bevorzugter Weise ist das Farbmesssystem so eingerichtet, dass der erste Beleuchtungsbereich und der mindestens eine zweite Beleuchtungsbereich jeweils zumindest teilweise mit dem linearen Messbereich überlappen, und dass die erste Beleuchtungseinrichtung und die mindestens eine zweite Beleuchtungseinrichtung eingerichtet sind, alternierend betrieben zu werden. Wie zuvor beschrieben führt eine möglichst vollständige Ausleuchtung des Messbereichs durch die erste Beleuchtungseinrichtung und/oder die mindestens eine zweite Beleuchtungseinrichtung zu einer hohen Effizienz der Messung, da die Oberfläche im gesamten Messbereich Licht zur ortsaufgelösten spektralen Messeinrichtung reflektiert.

Bei einer gleichzeitigen Beleuchtung der Oberfläche durch die erste Beleuchtungseinrichtung und die mindestens eine zweite Beleuchtungseinrichtung können Reflektionen von Licht der ersten Beleuchtungseinrichtung und Reflektionen von Licht der mindestens einen zweiten Beleuchtungseinrichtung nicht unterschieden werden. Durch ein alternierendes Betreiben der ersten Beleuchtungseinrichtung und der mindestens einen zweiten Beleuchtungseinrichtung kann die ortsaufgelöste spektrale Messeinrichtung alternierend Farbmessungen der ersten Beleuchtungseinrichtung und Farbmessungen der mindestens einen zweiten Beleuchtungseinrichtung aufnehmen.

Des Weiteren ist es bei einer weiteren Ausgestaltung des Farbmesssystems möglich, dass eine Beleuchtungszeit der ersten Beleuchtungseinrichtung und eine Beleuchtungszeit der mindestens einen zweiten Beleuchtungseinrichtung unabhängig voneinander einstellbar sind. Insbesondere ist es möglich, dass abwechselnd mehrere Farbmessungen der ersten Beleuchtungseinrichtung und eine Farbmessung der mindestens einen zweiten Beleuchtungseinrichtung aufgenommen werden. Somit kann die Oberfläche beispielhaft probenweise auf stärkere Strukturierungen getestet werden. Zudem ist es derart möglich, den zeitlichen Aufwand der Messungen zu reduzieren.

In weiter bevorzugter Weise ist das Farbmesssystem derart ausgestaltet, dass die ortsaufgelöste spektrale Messeinrichtung schwenkbar eingerichtet ist, und dass vorzugsweise der erste Beleuchtungsbereich und der mindestens eine zweite Beleuchtungsbereich höchstens teilweise, bevorzugt nicht überlappen. Dadurch können die erste Beleuchtungseinrichtung und die mindestens eine zweite Beleuchtungseinrichtung kontinuierlich betrieben werden. Ferner ist es möglich zwischen zwei Farbmessungen die ortsaufgelöste spektrale Messeinrichtung derart zu schwenken, dass der Messbereich zwischen dem ersten Beleuchtungsbereich und dem mindestens einen zweiten Beleuchtungsbereich wechselt. Insbesondere in Verfahren mit kontinuierlich durchlaufendem Trägermaterial kann eine Messung des ersten Beleuchtungsbereichs und eine zeitlich verzögerte Messung des mindestens einen zweiten Beleuchtungsbereichs einen gleichen Bereich der Oberfläche messen, wenn die Oberfläche sich zwischen den Messungen um eine gleiche Distanz bewegt hat.

Des Weiteren ist es bei einer weiteren Ausgestaltung des Farbmesssystems möglich, dass der erste Beleuchtungswinkel 30° bis 60° zur Messebene, bevorzugt 40° bis 50° zur Messebene, insbesondere 45° zur Messebene, beträgt. Insbesondere wenn der erste Beleuchtungswinkel 45° zur Messebene beträgt, entspricht das Farbmesssystem den Bedingungen der ISO 7724 Norm. Innerhalb einer üblichen Winkelungenauigkeit der ersten Beleuchtungseinrichtung sind Farbmessungen somit vergleichbar mit anderen Farbmessungen und Referenzmessungen.

Insbesondere beträgt der mindestens eine zweite Beleuchtungswinkel 10° bis 60° zur Messebene, bevorzugt 10° bis 45° zur Messebene, insbesondere 15° zur Messebene. Insbesondere ist der mindestens eine zweite Beleuchtungswinkel mindestens um 10°, bevorzugt mindestens um 20° verschieden von dem ersten Beleuchtungswinkel. Somit kann ein Unterschied zwischen resultierenden Lichtreflektionen erhöht werden, wenn eine starke Strukturierung der Oberfläche vorliegt.

In weiter bevorzugter Weise ist der mindestens eine zweite Beleuchtungswinkel variabel einstellbar, insbesondere variabel schwenkbar eingerichtet. Der mindestens eine zweite Beleuchtungswinkel kann somit an verschiedene Oberflächen angepasst oder an eine vorliegende Oberfläche optimiert werden. Zudem ist es möglich, verschiedene Messungen mit einer zweiten Beleuchtungseinrichtung vorzunehmen, indem der Beleuchtungswinkel zwischen Messungen variiert wird.

In bevorzugter Weise sind die erste Beleuchtungseinrichtung und die mindestens eine zweite Beleuchtungseinrichtung auf gegenüberliegenden Seiten der Messebene angeordnet. Insbesondere beträgt der mindestens eine zweite Beleuchtungswinkel 30° bis 60° zur Messebene, bevorzugt 40° bis 50° zur Messebene, insbesondere 45° zur Messebene. Der erste Beleuchtungswinkel und der mindestens eine zweite Beleuchtungswinkel können demnach einen Winkel von 60° bis 120° zwischen sich aufspannen. Somit kann auch der mindestens eine zweite Beleuchtungswinkel der ISO 7724 Norm entsprechen und Farbmessungen unter Verwendung der mindestens einen zweiten Beleuchtungseinrichtung können ebenfalls für Vergleiche mit anderen Farbmessungen herangezogen werden. Insbesondere behindern sich die erste Beleuchtungseinrichtung und die mindestens eine zweite Beleuchtungseinrichtung nicht, wenn sie auf gegenüberliegenden Seiten der Messebene angeordnet sind.

Darüber hinaus kann das Farbmesssystem ein Inline-Farbmesssystem sein. Insbesondere kann das Farbmesssystem ein Inline-Farbmessgerät im Bereich des Druckers angeordnet sein. Alternativ kann das Farbmesssystem als Offline-Gerät zur nachträglichen Vermessung einer bedruckten Oberfläche eingesetzt werden.

Das Verfahren zur ortsaufgelösten spektralen Farbmessung einer Oberfläche, insbesondere einer strukturierten Oberfläche, weist die folgenden Schritte auf:
Eine erste ortsaufgelöste spektrale Farbmessung der Oberfläche wird unter einem ersten Beleuchtungswinkel durchgeführt. Die erste ortsaufgelöste spektrale Farbmessung kann zur Qualitätsprüfung herangezogen werden, indem die ortsaufgelöste spektrale Farbmessung mit einer Referenzmessung verglichen wird.

Zudem wird eine zweite ortsaufgelöste spektrale Farbmessung der Oberfläche unter einem zweiten Beleuchtungswinkel durchgeführt. Die zweite ortsaufgelöste spektrale Farbmessung kann verwendet werden, um mit der ersten ortsaufgelösten spektralen Farbmessung verglichen zu werden. Wie zuvor beschrieben, kann bei starker Strukturierung einer Oberfläche eine Farbmessung abhängig vom Beleuchtungswinkel sein. Somit ist eine Farbmessung im Bereich einer starken Strukturierung nicht verlässlich und kann Qualitätsprüfungen falsch negativ beeinflussen. Wie nachfolgend beschrieben, kann die zweite ortsaufgelöste spektrale Farbmessung herangezogen werden, um Messpunkte mit starker Strukturierung zu identifizieren.

Anschließend werden die erste ortsaufgelöste spektrale Farbmessung und die zweite ortsaufgelöste spektrale Farbmessung verglichen, wobei eine Differenz zwischen Messpunkten der ersten ortsaufgelösten spektralen Farbmessung und korrespondierenden Messpunkten der zweiten ortsaufgelösten spektralen Farbmessung ermittelt wird. Dabei wird bevorzugt nach der Norm ISO 24585-2 Kapitel 4.8.2 vorgegangen. Während die Norm ISO 24585-2 Kapitel 4.8.2 den Einsatz eines Beleuchtungswinkels von 45° zur Oberfläche voraussetzt, funktioniert die dargestellte Berechnung der Differenz auch für beliebige andere Beleuchtungswinkel. Somit wird ein Vergleich zweier Farbmessungen derselben Oberfläche unter verschiedenen Beleuchtungswinkeln durchgeführt. Hohe Differenzen zwischen korrespondierenden Messpunkten können, wie oben beschrieben, Oberflächenbereichen mit starker Strukturierung entsprechen.

Ferner werden kritische Messpunkte identifiziert, deren ermittelte Differenz einen Grenzwert überschreitet. Der Grenzwert kann dabei derart eingestellt werden, dass ausreichend viele Messpunkte identifiziert werden, ohne dass messspezifische Schwankungen falsch interpretiert werden. Identifizierte Messpunkte können wie nachfolgend beschrieben bei Qualitätskontrollen nicht berücksichtigt oder aus der für den Farbvergleich verwendeten Farbmessung entfernt werden.

In bevorzugter Weise werden die erste ortsaufgelöste spektrale Farbmessung, die zweite ortsaufgelöste spektrale Farbmessung und/oder ein gemittelter Datensatz mit einem Musterdatensatz verglichen. Ein gemittelter Datensatz kann sich zusammensetzen aus der ersten ortsaufgelösten spektralen Farbmessung und der zweiten ortsaufgelösten spektralen Farbmessung. Beispielsweise können Messpunkte der ersten ortsaufgelösten spektralen Farbmessung und korrespondierende Messpunkte der zweiten ortsaufgelösten spektralen Farbmessung gemittelt werden, wobei gegebenenfalls eine Wichtung der verschiedenen Anteile erfolgen kann.

Wie zuvor beschrieben, kann eine Farbmessung mit einem Musterdatensatz verglichen werden, um eine Qualitätskontrolle der Oberfläche durchzuführen. Dabei wird bevorzugt nach der Norm ISO 24585-2 Kapitel 4.8.2 vorgegangen. Ein Ähnlichkeitswert kann das Ergebnis des Vergleichs darstellen. Ist ein

Ähnlichkeitswert z.B. eines Messwerts zu gering, kann dies bedeuten, dass die untersuchte Oberfläche bestimmten Anforderungen an das Farbspektrum nicht genügt.

Insbesondere werden die kritischen Messpunkte bei dem Vergleichen einer der ortsaufgelösten spektralen Farbmessungen, insbesondere unter einem Beleuchtungswinkel von 45°, mit einem Musterdatensatz nicht berücksichtigt. Das Vergleichen der ersten ortsaufgelösten spektralen Farbmessung und der mindestens einen zweiten ortsaufgelösten spektralen Farbmessung ermittelt, wie zuvor beschrieben, ob die Oberfläche aus verschiedenen Beleuchtungswinkeln ein ähnliches Farbspektrum aufweist. Ist dies für einzelne Messpunkte nicht der Fall, können diese Messpunkte keine aussagekräftigen Werte für die Qualitätskontrolle liefern. Somit ist es von Vorteil, diese Messpunkte im Vergleich mit dem Musterdatensatz nicht zu berücksichtigen.

Alternativ können insbesondere kritische Messpunkte aus einem Datensatz entfernt werden. Der Datensatz kann ein Datensatz der ersten ortsaufgelösten spektralen Farbmessung oder ein Datensatz der mindestens einen zweiten ortsaufgelösten spektralen Farbmessung sein. Insbesondere kann dadurch die Verwendung der kritischen Messpunkte, zum Beispiel für die Qualitätskontrolle, verhindert werden.

In bevorzugter Weise werden die erste ortsaufgelöste spektrale Farbmessung und die zweite ortsaufgelöste spektrale Farbmessung alternierend durchgeführt, insbesondere mit einer Wechselfrequenz von 100 bis 300.000 Hz, insbesondere mit einer Wechselfrequenz von 100 bis 100.000 Hz, bevorzugt mit einer Wechselfrequenz von 1.000 bis 10.000 Hz. Durch ein alternierendes Durchführen der ersten ortsaufgelösten spektralen Farbmessung und der mindestens einen zweiten ortsaufgelösten spektralen Farbmessung können viele aufeinanderfolgende Qualitätskontrollen in Folge ausgeführt werden, wodurch eine ganze Fläche an Messpunkten überprüft werden können. Insbesondere kann bei einem zuvor beschriebenen Inline-Farbmesssystem bei einer ausreichend hohen Wechselfrequenz sichergestellt werden, dass zwei aufeinanderfolgende ortsaufgelöste spektrale Farbmessungen näherungsweise die gleiche Fläche der Oberfläche untersuchen.

Des Weiteren ist es bei einer weiteren Ausgestaltung des Verfahrens möglich, ein oder mehr Messpunkte der jeweiligen ortsaufgelösten spektralen Farbmessung als Messintervall zusammenzufassen. Damit ist es möglich, einen Rechenaufwand der Vergleiche zu reduzieren.

Im Folgenden wird die Erfindung anhand von Ausführungsbeispielen mit Bezug auf die Zeichnung erläutert. In der Zeichnung zeigen
- Fig. 1: eine erste Anlage mit einem erfindungsgemäßen Farbmesssystem,
- Fig. 2: eine zweite Anlage mit einem erfindungsgemäßen Farbmesssystem,
- Fig. 3: eine dritte Anlage mit einem erfindungsgemäßen Farbmesssystem,
- Fig. 4: ein Ausführungsbeispiel eines erfindungsgemäßen Farbmesssystems,
- Fig. 5: ein weiteres Ausführungsbeispiel eines erfindungsgemäßen Farbmesssystems,
- Fig. 6: ein Ausführungsbeispiel eines erfindungsgemäßen Verfahrens und
- Fig. 7: ein Ausführungsbeispiel zur anschaulichen Darstellung des Vergleichens einer ersten Farbmessung mit einer zweiten Farbmessung (a) und einer ersten Farbmessung mit einem Musterdatensatz (b).

In der nachfolgenden Beschreibung der verschiedenen erfindungsgemäßen Ausführungsbeispiele werden Bauteile und Elemente mit gleicher Funktion und gleicher Wirkungsweise mit denselben Bezugszeichen versehen, auch wenn die Bauteile und Elemente bei den verschiedenen Ausführungsbeispielen in ihrer Dimension oder Form Unterschiede aufweisen können.

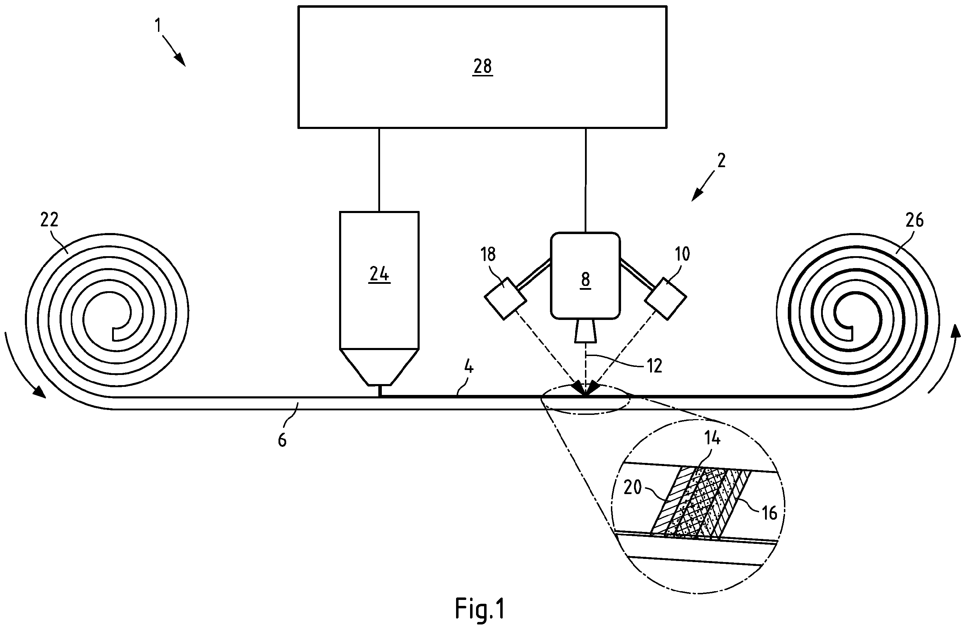

Fig. 1 zeigt schematisch eine Anlage 1 mit einem Farbmesssystem 2 für ortsaufgelöste spektrale Farbmessungen einer bedruckten Oberfläche 4, insbesondere einer strukturierten Oberfläche 4 eines Trägermaterials 6. Das Farbmesssystem 2 weist eine ortsaufgelöste spektrale Messeinrichtung 8 auf. Ferner weist das Farbmesssystem 2 eine erste Beleuchtungseinrichtung 10 auf. Die erste Beleuchtungseinrichtung 10 erzeugt Licht einer genormten Beleuchtungsart, beispielsweise D50, mit einer vorgegebenen spektralen Intensitätsverteilung über den sichtbaren spektralen Bereich von 380 bis 730 nm.

Die ortsaufgelöste spektrale Messeinrichtung 8 spannt eine Messebene 12 mit einem linearen Messbereich 14 auf der Oberfläche 4 auf. Dabei weist der lineare Messbereich 14 eine endliche, aber im Verhältnis zur Länge geringe Breite auf, ist also nicht im mathematischen Sinne eine Linie. Die Messebene 12 wird von einer mittleren Linie des linearen Messbereichs 14 und einer mittleren Linie der ortsaufgelösten spektralen Messeinrichtung 8 aufgespannt.

Die ortsaufgelöste spektrale Messeinrichtung 8 ist eingerichtet, vom linearen Messbereich 14 ausgehende Lichtreflexionen spektral zu messen. Die ortsaufgelöste spektrale Messeinrichtung 8 enthält eine multispektrale oder hyperspektrale Kamera, mit der für jeden erfassten Messpunkt des Messbereichs 14 vorzugsweise in 36 Wellenlängenbändern pro aufgenommenem Messpunkt eine spektrale Intensitätsverteilung gemessen wird. Somit wird pro Wellenlängenband eine Farbinformation erzeugt, die zusammen ein Spektrum ergeben. Somit entsteht pro aufgenommenem Messpunkt ein Farbspektrum aus vorzugsweise 36 Wellenlängenbändern. Eine übliche Sensortechnik besteht darin, auf einem CMOS Sensor einzelne Pixel mit unterschiedlichen Farbfiltern zu versehen, so dass mit einer Bildaufnahme eine Mehrzahl von spektralen Informationen aus einem aufgenommenen Bildbereich aufgezeichnet werden können.

Die ortsaufgelöste spektrale Messeinrichtung 8 kann auch eine hyperspektrale Kamera aufweisen, die eine gegenüber einer multispektralen Kamera vergrößerte spektrale Auflösung von beispielsweise bis zu 350 oder mehr Wellenlängenbänder pro Messpunkt aufweist.

Die erste Beleuchtungseinrichtung 10 ist eingerichtet, einen ersten Beleuchtungsbereich 16 auf der Oberfläche 4 unter einem ersten Beleuchtungswinkel zur Messebene 12 zu beleuchten. Der erste Beleuchtungswinkel beträgt normgemäß 45° zur Messebene 12. Alternativ kann der erste Beleuchtungswinkel einen Wert zwischen 30° bis 60° zur Messebene 12, bevorzugt 40° bis 50° zur Messebene 12, annehmen. Ferner ist der erste Beleuchtungsbereich 16 linienförmig. Dabei bedeutet linienförmig, dass der erste Beleuchtungsbereich 16 eine endliche, aber im Verhältnis zur Länge geringe Breite aufweist, also erneut nicht im mathematischen Sinne eine Linie darstellt. Insbesondere ist die Breite des ersten Beleuchtungsbereichs 16 breiter als die Breite des Messbereichs 14 damit der erste Beleuchtungsbereich 16 den Messbereich 14 vollständig ausleuchten kann. In Fig. 1 ist der erste Beleuchtungsbereich 16 jedoch im Sinne der graphischen Differenzierbarkeit als nur teilweise mit dem Messbereich 14 überlappend dargestellt. Der erste Beleuchtungsbereich 16 könnte den Messbereich 14 jedoch auch vollständig ausleuchten.

Zudem weist das Farbmesssystem 2 eine zweite Beleuchtungseinrichtung 18 auf. In Fig. 1-3 ist jeweils nur eine zweite Beleuchtungseinrichtung 18 dargestellt. Jedoch kann das Farbmesssystem 2 weitere Beleuchtungseinrichtungen aufweisen, die in Kombination oder unabhängig voneinander verwendet werden können. Die zweite Beleuchtungseinrichtung 18 ist eingerichtet, einen zweiten Beleuchtungsbereich 20 auf der Oberfläche 4 unter einem zweiten Beleuchtungswinkel zur Messebene 12 zu beleuchten.

Die erste Beleuchtungseinrichtung 10 und die zweite Beleuchtungseinrichtung 18 sind auf gegenüberliegenden Seiten der Messebene 12 angeordnet. Der zweite Beleuchtungswinkel beträgt dabei ebenfalls normgemäß 45° zur Messebene 12. Alternativ kann der zweite Beleuchtungswinkel einen Wert zwischen 10° bis 60° zur Messebene 12, bevorzugt 10° bis 45° zur Messebene 12, insbesondere 15° zur Messebene 12 annehmen. Insbesondere kann der zweite Beleuchtungswinkel variabel einstellbar sein. Damit kann der zweite Beleuchtungswinkel auf eine jeweils zu untersuchende Oberfläche 4 optimal eingestellt werden.

Der zweite Beleuchtungsbereich 20 ist linienförmig. Dabei bedeutet linienförmig erneut, dass der zweite Beleuchtungsbereich 20 eine endliche, aber im Verhältnis zur Länge geringe Breite aufweist. Insbesondere ist die Breite des zweiten Beleuchtungsbereichs 20 breiter als die Breite des Messbereichs 14 damit der zweite Beleuchtungsbereich 20 den Messbereich 14 vollständig ausleuchten kann.

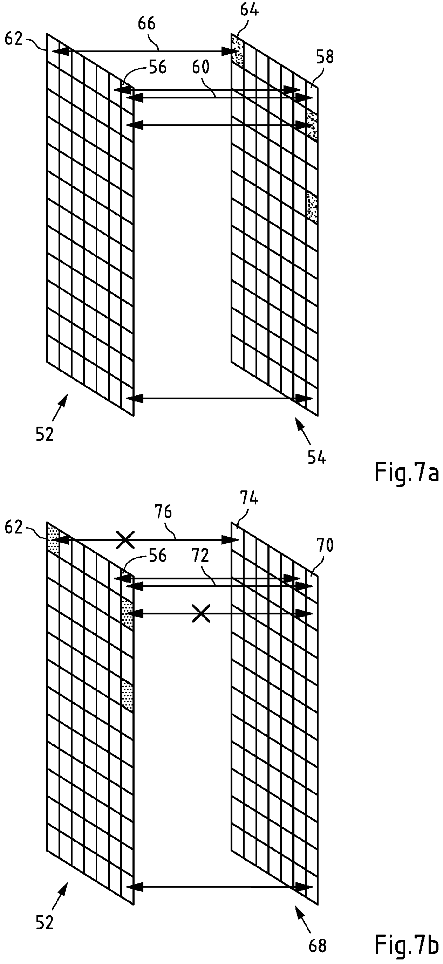

In Fig. 1 kann die zweite Beleuchtungseinrichtung 18 auch als erste Beleuchtungseinrichtung 10 fungieren und umgekehrt, da beide unter einem Winkel von 45° zur Messebene angeordnet sind. Insbesondere können sowohl Farbmessungen 52 mit Beleuchtung der ersten Beleuchtungseinrichtung 10 als auch Farbmessungen 54 mit Beleuchtung der zweiten Beleuchtungseinrichtung 18 zum Vergleich mit dem Musterdatensatz 68 verwendet werden (siehe Fig. 7).

Der erste Beleuchtungsbereich 16 und der zweite Beleuchtungsbereich 20 überlappen jeweils zumindest teilweise mit dem linearen Messbereich 14. Bevorzugt überlappen der erste Beleuchtungsbereich 16 und der zweite Beleuchtungsbereich 20 jeweils vollständig mit dem linearen Messbereich 14, sodass der lineare Messbereich 14 vollständig ausgeleuchtet ist.

Zudem sind die erste Beleuchtungseinrichtung 10 und die zweite Beleuchtungseinrichtung 18 eingerichtet, alternierend betrieben zu werden. Da der Einfluss der unterschiedlichen Beleuchtungswinkel auf die Farbmessung untersucht werden soll, müssen nacheinander eine Farbmessung mit Beleuchtung der ersten Beleuchtungseinrichtung 10 und eine Farbmessung mit Beleuchtung der zweiten Beleuchtungseinrichtung 18 aufgenommen werden. Dazu muss die jeweils andere Beleuchtungseinrichtung ausgeschaltet werden.

In einer beispielhaften Ausführung sind eine Beleuchtungszeit der ersten Beleuchtungseinrichtung 10 und eine Beleuchtungszeit der zweiten Beleuchtungseinrichtung 18 unabhängig voneinander einstellbar. Insbesondere können die erste Beleuchtungseinrichtung 10 und die zweite Beleuchtungseinrichtung 18 unterschiedlich lange betrieben werden. Zum Beispiel kann nur jede fünfte Farbmessung mit Beleuchtung der zweiten Beleuchtungseinrichtung 18 aufgenommen werden. Dann wird periodisch wiederkehrend die erste Beleuchtungseinrichtung 10 für vier Farbmessungen und die zweite Beleuchtungseinrichtung 18 für eine Farbmessung betrieben.

In einer weiteren beispielhaften Ausführung ist die ortsaufgelöste spektrale Messeinrichtung 8 schwenkbar eingerichtet. Dabei überlappen der erste Beleuchtungsbereich 16 und der zweite Beleuchtungsbereich 20 höchstens teilweise, bevorzugt nicht. In dem Fall sind der erste Beleuchtungsbereich 16 und der zweite Beleuchtungsbereich 20 zum Beispiel nebeneinander angeordnet. Alternativ kann das Farbmesssystem 2 schwenkbar eingerichtet sein, sodass die erste Beleuchtungseinrichtung 10 und die zweite Beleuchtungseinrichtung 18 gemeinsam mit der ortsaufgelösten spektralen Messeinrichtung 8 geschwenkt werden können.

Die ortsaufgelöste spektrale Messeinrichtung 8 oder das Farbmesssystem 2 können dabei so geschwenkt werden, dass der der lineare Messbereich 14 alternierend mit dem ersten Beleuchtungsbereich 16 und dem zweiten Beleuchtungsbereich 20 zumindest teilweise überlappt. Dabei muss zum Zeitpunkt der jeweiligen Farbmessung der Messbereich 14 wenigstens teilweise mit dem ersten Beleuchtungsbereich 16 oder dem zweiten Beleuchtungsbereich 20 überlappen.

In einer beispielhaften Ausführung wird die ortsaufgelöste spektrale Messeinrichtung 8 oder das Farbmesssystem 2 so geschwenkt, dass der lineare Messbereich 14 unterschiedlich lange mit dem ersten Beleuchtungsbereich 16 und mit dem zweiten Beleuchtungsbereich 20 zumindest teilweise überlappt. Damit kann ein gleicher Effekt erzielt werden, wie durch die unterschiedliche Beleuchtungszeiten im vorherigen Ausführungsbeispiel.

Das Farbmesssystem 2 ist insbesondere ein Inline-Farbmesssystem. Die Anlage 1 umfasst ferner eine erste Rolle 22, von der das Trägermaterial 6 abgerollt wird. Das Trägermaterial 6 wird unterhalb des Farbdruckers 24 und des Farbmesssystems 2 geführt und dann wieder auf einer Rolle 26 aufgerollt. Insoweit kann man von einem endlosen Trägermaterial 6 sprechen, mit dem das kontinuierliche Drucken und das spektrale Farbmessen durchgeführt wird. Dabei ist selbstverständlich, dass das endlose Trägermaterial 6 eine endliche, aber große Länge aufweist.

Der Farbdrucker 24 ist vorliegend als digitaler Tintenstrahldrucker ausgebildet, mit dem die Oberfläche 4 des Substrates in dem dargestellten Inline-Prozess bedruckt wird. Bei dieser Anwendung sind Tintenstrahldrucker bevorzugt, jedoch ist die Erfindung nicht auf die Anwendung von Tintenstrahldruckern beschränkt.

Die Ergebnisse der spektralen Messungen durch das Farbmesssystem 2 werden einer Steuerungseinrichtung 28 übertragen, die die aufgenommenen spektralen Daten auswertet und den Farbdrucker 24 steuert.

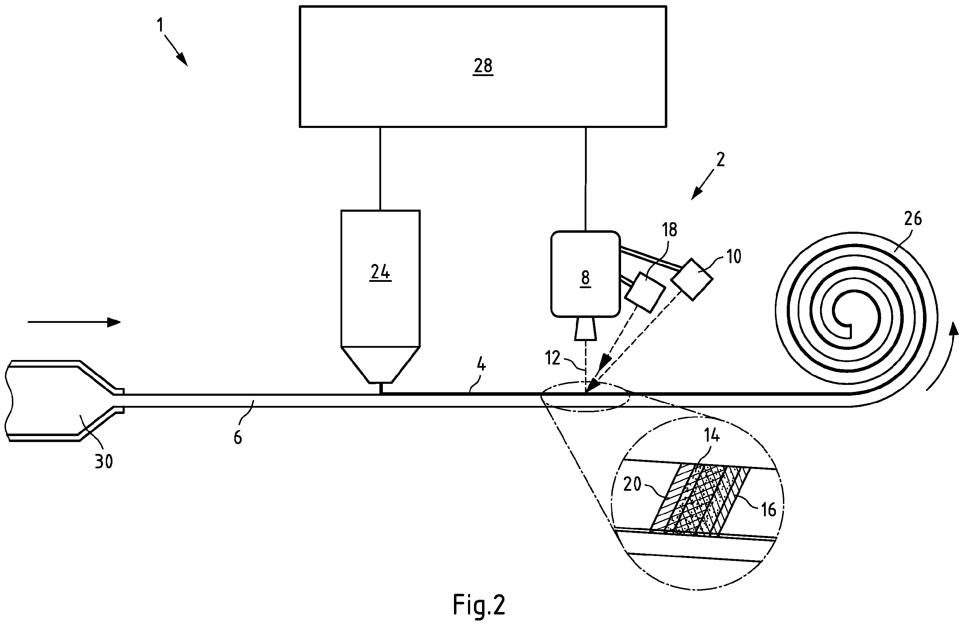

Fig. 2 zeigt schematisch eine zweite Anlage 1 mit einem Farbmesssystem 2 für ortsaufgelöste spektrale Farbmessungen einer bedruckten Oberfläche 4, insbesondere einer strukturierten Oberfläche 4 eines Trägermaterials 6. Im Vergleich zur Anlage 1 nach Fig. 1 wird das Trägermaterial 6 nicht von einer Rolle abgewickelt, sondern durch einen Extrusionsprozess hergestellt. Dazu ist schematisch ein Extrusionswerkzeug 30 dargestellt, aus dem ein Strang zur Herstellung beispielsweise eines Kantenmaterials für die Anwendung bei Möbelplatten extrudiert wird.

Grundsätzlich notwendige Kalander und Abkühlstationen sind hier der Einfachheit wegen nicht dargestellt. Anstelle des Extrusionswerkzeugs 30 kann auch eine Stranggussvorrichtung eingesetzt werden, um einen kontinuierlichen Strang an Trägermaterial zu erzeugen.

Zudem ist die zweite Beleuchtungseinrichtung 18 anders als in Fig. 1 eingerichtet. Wie dargestellt, befindet sich die zweite Beleuchtungseinrichtung 18 auf der gleichen Seite der Messebene 12 wie die erste Beleuchtungseinrichtung 10. Zudem beträgt der zweite Beleuchtungswinkel weniger als 45° zur Messebene 12. Dabei könnte der zweite Beleuchtungswinkel auch mehr als 45° zur Messebene 12 betragen.

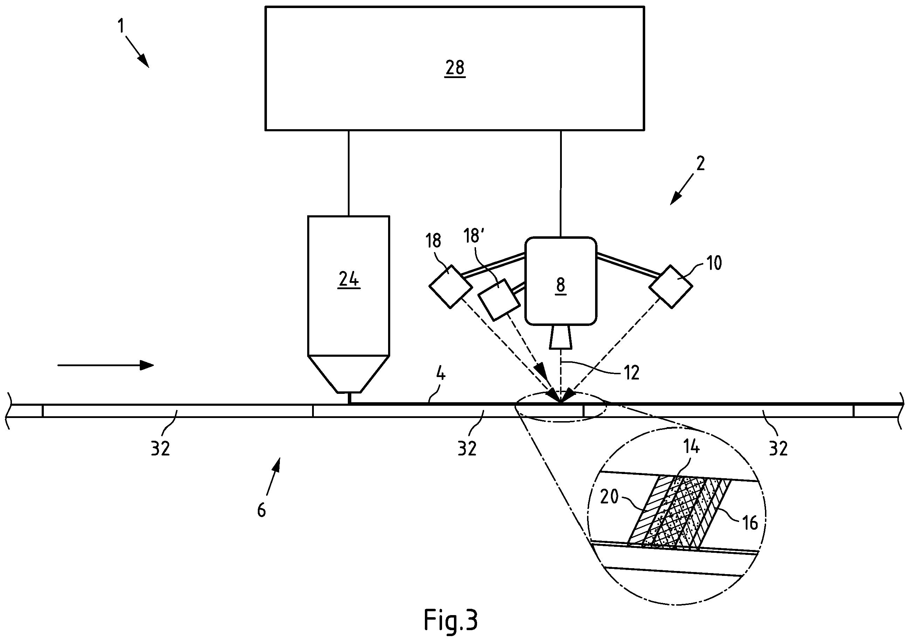

Fig. 3 zeigt schematisch eine dritte Anlage 1 mit einem Farbmesssystem 2 für ortsaufgelöste spektrale Farbmessungen einer bedruckten Oberfläche 4, insbesondere einer strukturierten Oberfläche 4 einer Trägermaterial 6. Im Vergleich zu den Anlagen 1 nach den Fig. 1 und 2 ist das Trägermaterial 6 nicht als endloses Material ausgebildet, sondern besteht aus einer Vielzahl von aneinander anstoßenden Elementen 32, beispielsweise Platten oder Blättern. Das Trägermaterial 6 besteht also aus einzelnen Elementen 32, die vor und nach dem Bedrucken separat vorliegen. Das kontinuierliche Bedrucken und Messen von Oberflächen 4 erfolgt dann auf dem aus einzelnen Elementen 32 zusammengesetzten Trägermaterial 6.

In Fig. 3 sind die erste Beleuchtungseinrichtung 10 und die zweite Beleuchtungseinrichtung 18 erneut auf gegenüberliegenden Seiten der Messebene 12 angeordnet. Zudem weist das Farbmesssystem 2 eine weitere zweite Beleuchtungseinrichtung 18' auf. Der erste Beleuchtungswinkel der ersten Beleuchtungseinrichtung 10 und der zweite Beleuchtungswinkel der zweiten Beleuchtungseinrichtung 18 betragen 45° zur Messebene 12, wie in Fig. 1 dargestellt. Der zweite Beleuchtungswinkel der weiteren zweiten Beleuchtungseinrichtung 18' beträgt weniger als 45° zur Messebene 12. Dabei könnte der zweite Beleuchtungswinkel auch mehr als 45° zur Messebene 12 betragen. Zudem wird in Fig. 3 aus Gründen der Übersichtlichkeit nur ein zweiter Beleuchtungsbereich 20 gezeigt. Die weitere zweite Beleuchtungseinrichtung 18' kann jedoch auch einen eigenen zweiten Beleuchtungsbereich 20' beleuchten. Zusätzlich können noch weitere zweite Beleuchtungseinrichtungen mit unterschiedlichen zweiten Beleuchtungswinkeln an dem Farbmesssystem angeordnet sein.

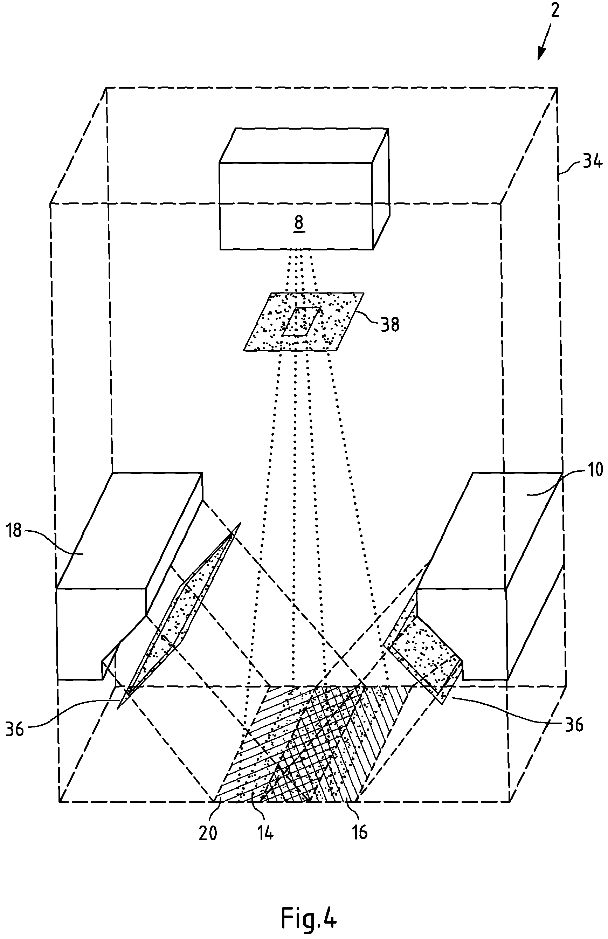

Fig. 4 zeigt schematisch eine Ausführungsform eines Farbmesssystems 2. Das Farbmesssystem 2 weist zunächst ein Gehäuse 34 auf, in dem die Komponenten angeordnet sind. Im Gehäuse 34 sind eine erste Beleuchtungseinrichtung 10 und zweite Beleuchtungseinrichtung 18 angeordnet, die einen Messbereich 14 auf der Oberfläche 4 des Trägermaterials 6 beleuchtet. Dabei wird Licht einer genormten Beleuchtungsart, beispielsweise D50, mit einer vorgegebenen spektralen Intensitätsverteilung über den sichtbaren spektralen Bereich von 380 bis 730 nm erzeugt.

Im Strahlengang vor dem Messbereich 14 ist jeweils ein erster Polarisationsfilter 36 angeordnet, der das eintreffende Licht polarisiert, bevor es auf dem Messbereich 14 auftrifft. Das vom Messbereich 14 reflektierte Licht verläuft dann in Richtung eines zweiten Polarisationsfilters 38. Der erste Polarisationsfilter 36 lässt von den in allen Richtungen schwingenden Lichtwellen jeweils nur eine Schwingungsrichtung durch. Die durch den ersten Polarisationsfilter 36 ausgerichteten Lichtstrahlen werden von der Farboberfläche im Messbereich 14 teilweise spiegelnd reflektiert, insbesondere wenn die Oberfläche 4 durch einen kurz zuvor erfolgten Druckprozess noch nass ist, jedenfalls noch nicht ausgetrocknet ist. Bei einer spiegelnden Reflexion ändert sich die Schwingungsrichtung des Lichtes nicht. Der zweite Polarisationsfilter 38 ist gegenüber dem ersten Polarisationsfilter um 90° gedreht angeordnet, so dass die vom Messbereich 14 reflektierten Lichtwellen nicht durchgelassen werden.

Bei einer spektralen Messung von abgetrockneten Farbdrucken können die beschriebenen Polarisationsfilter auch weggelassen werden.

Die ortsaufgelöste spektrale Messeinrichtung 8 enthält eine multispektrale oder hyperspektrale Kamera, mit der für jeden erfassten Messpunkt des Messbereichs 14 vorzugsweise in 36 Wellenlängenbändern pro aufgenommenem Messpunkt eine spektrale Intensitätsverteilung gemessen wird. Somit wird pro Wellenlängenband eine Farbinformation erzeugt, die zusammen ein Spektrum ergeben. Somit entsteht pro aufgenommenem Messpunkt ein Farbspektrum aus vorzugsweise 36 Wellenlängenbändern. Eine übliche Sensortechnik besteht darin, auf einem CMOS Sensor einzelne Pixel mit unterschiedlichen Farbfiltern zu versehen, so dass mit einer Bildaufnahme eine Mehrzahl von spektralen Informationen aus einem aufgenommenen Bildbereich aufgezeichnet werden können.

Die ortsaufgelöste spektrale Messeinrichtung 8 kann auch eine hyperspektrale Kamera aufweisen, die eine gegenüber einer multispektralen Kamera vergrößerte spektrale Auflösung von beispielsweise bis zu 350 oder mehr Wellenlängenbänder pro Messpunkt aufweist.

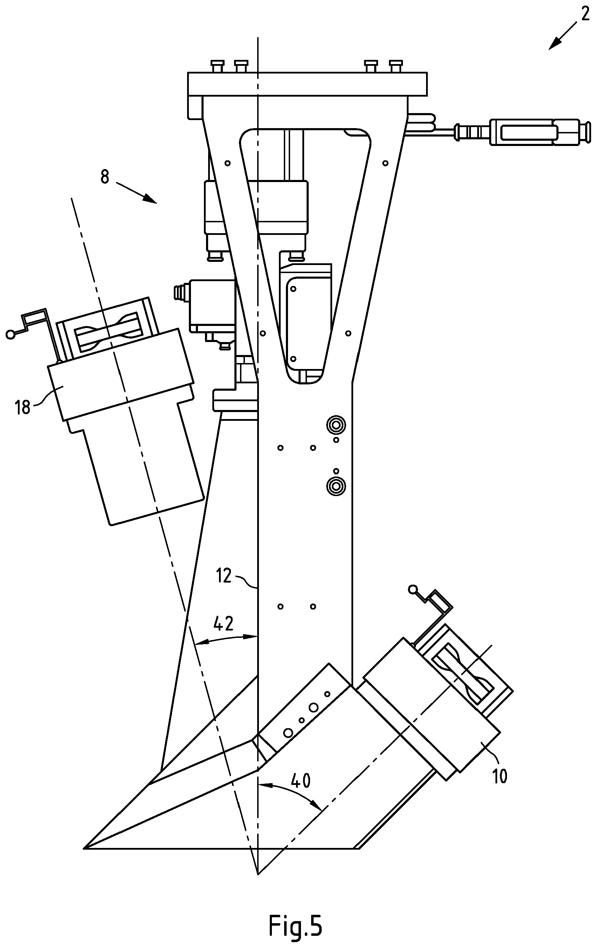

Fig. 5 zeigt schematisch eine weitere Ausführungsform eines Farbmesssystems 2. Das Farbmesssystem 2 weist eine ortsaufgelöste spektrale Messeinrichtung 8 auf, die über ein Gehäuse mit einer ersten Beleuchtungseinrichtung 10 verbunden ist. Die erste Beleuchtungseinrichtung 10 ist unter einem Winkel 40 zur Messebene 12 ausgerichtet. Der Winkel 40 ist dabei fest auf 45° eingestellt. Eine zweite Beleuchtungseinrichtung 18 ist separat arrangiert. Insbesondere ist die zweite Beleuchtungseinrichtung 18 unter einem Winkel 42 zur Messebene 12 ausgerichtet. Die zweite Beleuchtungseinrichtung 18 ist insbesondere so arrangiert, dass der Winkel 42 variierbar ist. Zudem sind die erste Beleuchtungseinrichtung 10 und die zweite Beleuchtungseinrichtung 18 relativ zur Messebene 12 auf gegenüberliegenden Seiten arrangiert.

Das erfindungsgemäße Verfahren zur ortsaufgelösten spektralen Farbmessung einer Oberfläche 4, insbesondere einer strukturierten Oberfläche 4, kann dann mit einer in den Fig. 1 bis 4 dargestellten ortsaufgelösten spektralen Messeinrichtung 2 wie folgt durchgeführt werden.

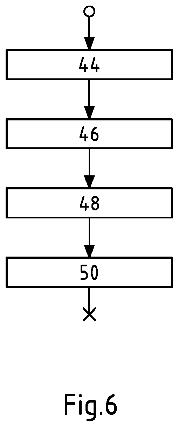

Fig. 6 zeigt schematisch ein erfindungsgemäßes Verfahren. Zunächst wird in Schritt 44 eine erste ortsaufgelöste spektrale Farbmessung der Oberfläche 4 unter einem ersten Beleuchtungswinkel durchgeführt. Dazu wird die erste Beleuchtungseinrichtung 10 eingestellt, den Messbereich 14 mindestens teilweise zu beleuchten. Zudem wird die zweite Beleuchtungseinrichtung 18 eingestellt, den Messbereich 14 nicht zu beleuchten. Dann nimmt die ortsaufgelöste spektrale Messeinrichtung 8 im Messbereich 14 in jedem Messpunkt ein Farbspektrum der Oberfläche 4 auf.

Anschließend wird in Schritt 46 eine zweite ortsaufgelöste spektrale Farbmessung der Oberfläche 4 unter einem zweiten Beleuchtungswinkel durchgeführt. Dazu wird umgekehrt verfahren, wie im Schritt 44, indem die erste Beleuchtungseinrichtung 10 eingestellt wird, den Messbereich 14 nicht zu beleuchten, während die zweite Beleuchtungseinrichtung 18 eingestellt wird, den Messbereich 4 mindestens teilweise zu beleuchten. Dann nimmt die ortsaufgelöste spektrale Messeinrichtung 8 ein weiteres Farbspektrum der Oberfläche 4 im Messbereich 14 auf.

Dann werden in Schritt 48 die erste ortsaufgelöste spektrale Farbmessung und die zweite ortsaufgelöste spektrale Farbmessung verglichen. Dafür wird eine Differenz zwischen Messpunkten der ersten ortsaufgelösten spektralen Farbmessung und korrespondierenden Messpunkten der zweiten ortsaufgelösten spektralen Farbmessung ermittelt. Dabei wird bevorzugt nach der Norm ISO 24585-2 Kapitel 4.8.2 vorgegangen.

Anschließend werden in Schritt 50 kritische Messpunkte identifiziert, bei denen die ermittelte Differenz einen Grenzwert überschreitet. Zwei aufeinanderfolgende Farbmessungen mit unterschiedlicher Beleuchtung haben mit hoher Wahrscheinlichkeit eine Differenz ungleich null, unter anderem auf Grund intrinsischer Messfehler und/oder Rauschen der Messwerte. Daher ist der Grenzwert so gewählt, dass erst ab einer signifikanten Differenz von z.B. ΔE₀₀ > 0,3 (Norm ISO 24585-2 Kapitel 4.8.2), ein Messpunkt als kritisch eingestuft wird. Ein kritischer Messpunkt kann auch als Ausreißer bezeichnet werden. Wenn bei zweifacher Farbmessung der gleichen Oberfläche 4 zwei derart stark unterschiedliche Farbspektren gemessen werden, ist eine eindeutige Zuordnung eines Farbspektrums zu dem Oberflächenbereich nicht möglich. Dies kommt insbesondere häufig bei starken Strukturierungen auf strukturierten Oberflächen 4 vor. Kritische Messpunkte indizieren deshalb, dass ein korrespondierender Oberflächenbereich eine starke Strukturierung aufweist, die eine eindeutige Zuweisung eines Farbspektrums nicht möglich macht.

In Fig. 7a werden die Schritte 48 und 50 aus Fig. 6 schematisch dargestellt. Dabei wird die erste ortsaufgelöste spektrale Farbmessung 52 mit der zweiten ortsaufgelösten Farbmessung 54 verglichen. Beispielsweise wird der Messpunkt 56 der ersten Farbmessung 52 mit dem korrespondierenden Messpunkt 58 der zweiten Farbmessung 54 verglichen, was mit einem Doppelpfeil 60 dargestellt wird. Schematisch dargestellt haben die beiden Punkte eine ähnliche Graustufe und werden deshalb als einander ähnlich eingestuft. Weiter beispielhaft werden auch der Messpunkt 62 der ersten Farbmessung 52 und der Messpunkt 64 der zweiten Farbmessung 54 verglichen, was mit einem Doppelpfeil 66 symbolisiert wird. Erneut schematisch dargestellt, hat der Messpunkt 64 ein wesentlich anderes Farbspektrum als der Messpunkt 62, Daher werden die beiden Messpunkte 62, 64 als kritische Messpunkte eingestuft. Analog wird auch für alle anderen dargestellten Messpunkte vorgegangen.

In Fig. 7b wird die erste ortsaufgelöste spektrale Farbmessung 52 mit einem Musterdatensatz 68 verglichen. Alternativ kann anstelle der ersten ortsaufgelösten spektralen Farbmessung 52 auch die zweite ortsaufgelöste spektrale Farbmessung 54 und/oder ein gemittelter Datensatz aus der ersten ortsaufgelösten spektralen Farbmessung 52 und der zweiten ortsaufgelösten spektralen Farbmessung 54 verwendet werden. Dabei werden erneut korrespondierende Messpunkte verglichen.

Beispielsweise wird der in Fig. 7a als nicht kritisch eingestufte Messpunkt 56 der ersten Farbmessung 52 mit dem Messpunkt 70 des Musterdatensatzes 68 verglichen 72.

Dabei werden insbesondere die kritischen Messpunkte bei dem Vergleichen der ersten Farbmessungen 52 mit dem Musterdatensatz nicht berücksichtigt. Zum Beispiel wird der kritische Messpunkt 62 der ersten Farbmessung 52 nicht mit dem korrespondierenden Messpunkt 74 des Musterdatensatzes 68 verglichen (Doppelpfeil 76). Dadurch wird eine fälschlich hohe Differenz zwischen der ersten Farbmessung und dem Musterdatensatz vermieden.

Wird das erfindungsgemäße Verfahren in einem Inline-Prozess verwendet, wie in Fig. 1 bis 3 dargestellt, wird das Trägermaterial 6 in der Zeit zwischen der ersten ortsaufgelösten spektralen Farbmessung 52 und der zweiten ortsaufgelösten spektralen Farbmessung 54 wenigstens in geringem Umfang bewegt. Damit die erste ortsaufgelöste spektrale Farbmessung 52 und die zweite ortsaufgelöste spektrale Farbmessung 54 verglichen werden können, muss der gemessene Oberflächenbereich der beiden Farbmessungen im Wesentlichen deckungsgleich sein. Im Wesentlichen bedeutet, dass mindestens 80%, bevorzugt mindestens 90% der Fläche deckungsgleich sind. Also darf sich der Oberflächenbereich, der in der ersten ortsaufgelösten spektralen Farbmessung 52 gemessen wurde, nicht um mehr als ein Fünftel, bevorzugt um mehr als ein Zehntel der Breite des Messbereichs 14 aus dem Messbereich 14 hinausbewegen, bevor die zweite ortsaufgelöste spektrale Farbmessung 54 durchgeführt wurde.

Folglich muss die Frequenz, mit der die erste ortsaufgelöste spektrale Farbmessung 52 und die zweite ortsaufgelöste spektrale Farbmessung 54 alterniert werden, groß genug sein, bzw. muss die Zeit zwischen der ersten ortsaufgelösten spektralen Farbmessung 52 und der zweiten ortsaufgelösten spektralen Farbmessung 54 gering genug sein. Deshalb werden die erste ortsaufgelöste spektrale Farbmessung 52 und die zweite ortsaufgelöste spektrale Farbmessung 54 alternierend mit einer Wechselfrequenz von 100 bis 100.000 Hz, bevorzugt mit einer Wechselfrequenz von 1.000 bis 10.000 Hz, durchgeführt.

Um einen Rechenaufwand der Vergleiche zu reduzieren können ein oder mehr Messpunkte der jeweiligen ortsaufgelösten spektralen Farbmessung als Messintervall zusammengefasst werden. Dies reduziert den zeitlichen und rechnerischen Aufwand auf Kosten der Präzision des Vergleichs. Es ist dabei sinnvoll, Messintervalle so zu wählen, dass korrespondierende Oberflächenbereiche nicht deutlich größer oder deutlich kleiner als die typische Strukturgröße der strukturierten Oberfläche sind.

## Patentansprüche

1. Farbmesssystem (2) für ortsaufgelöste spektrale Farbmessungen einer bedruckten Oberfläche (4), insbesondere einer strukturierten und bedruckten Oberfläche (4) eines Trägermaterials (6),
- mit einer ortsaufgelösten spektralen Messeinrichtung (8),
- mit einer ersten Beleuchtungseinrichtung (10),
- wobei die ortsaufgelöste spektrale Messeinrichtung (8) eine Messebene (12) mit einem linearen Messbereich (14) auf der Oberfläche (4) aufspannt,
- wobei die ortsaufgelöste spektrale Messeinrichtung (8) eingerichtet ist, vom linearen Messbereich (14) ausgehende Lichtreflexionen spektral zu messen,
- wobei die erste Beleuchtungseinrichtung (10) eingerichtet ist, einen ersten Beleuchtungsbereich (16) auf der Oberfläche (4) unter einem ersten Beleuchtungswinkel zur Messebene (12) zu beleuchten und
- wobei der erste Beleuchtungsbereich (16) linienförmig ist,
**dadurch gekennzeichnet,**
- **dass** das Farbmesssystem (2) mindestens eine zweite
Beleuchtungseinrichtung (18) aufweist,
- **dass** die mindestens eine zweite Beleuchtungseinrichtung (18) eingerichtet ist, mindestens einen zweiten Beleuchtungsbereich (20) auf der Oberfläche (4) unter mindestens einem zweiten Beleuchtungswinkel zur Messebene (12) zu beleuchten, und
- **dass** der mindestens eine zweite Beleuchtungsbereich (20) linienförmig ist.

2. Farbmesssystem (2) nach Anspruch 1,
**dadurch gekennzeichnet,**
**dass** der erste Beleuchtungsbereich (16) und der mindestens eine zweite Beleuchtungsbereich (20) jeweils zumindest teilweise mit dem linearen Messbereich (14) überlappen.

3. Farbmesssystem (2) nach Anspruch 1 oder 2,
**dadurch gekennzeichnet,**
**dass** die erste Beleuchtungseinrichtung (10) und die mindestens eine zweite Beleuchtungseinrichtung (18) eingerichtet sind, alternierend betrieben zu werden.

4. Farbmesssystem (2) nach einem der Ansprüche 1 bis 3,
**dadurch gekennzeichnet,**
**dass** eine Beleuchtungszeit der ersten Beleuchtungseinrichtung (10) und eine Beleuchtungszeit der mindestens einen zweiten Beleuchtungseinrichtung (18) unabhängig voneinander einstellbar sind.

5. Farbmesssystem (2) nach einem der Ansprüche 1 bis 4,
**dadurch gekennzeichnet,**
- **dass** die ortsaufgelöste spektrale Messeinrichtung (8) schwenkbar eingerichtet ist und
- **dass** vorzugsweise der erste Beleuchtungsbereich (16) und der mindestens eine zweite Beleuchtungsbereich (20) höchstens teilweise, bevorzugt nicht überlappen.

6. Farbmesssystem (2) nach einem der Ansprüche 1 bis 5,
**dadurch gekennzeichnet,**
**dass** der erste Beleuchtungswinkel 30° bis 60° zur Messebene (12), bevorzugt 40° bis 50° zur Messebene (12), insbesondere 45° zur Messebene (12), beträgt.

7. Farbmesssystem (2) nach einem der Ansprüche 1 bis 6,
**dadurch gekennzeichnet,**
**dass** der mindestens eine zweite Beleuchtungswinkel 10° bis 60° zur Messebene (12), bevorzugt 10° bis 45° zur Messebene (12), insbesondere 15° zur Messebene (12) beträgt.

8. Farbmesssystem (2) nach einem der Ansprüche 1 bis 7,
**dadurch gekennzeichnet,**
**dass** der mindestens eine zweite Beleuchtungswinkel variabel einstellbar ist.

9. Farbmesssystem (2) nach einem der Ansprüche 1 bis 8,
**dadurch gekennzeichnet,**
**dass** die erste Beleuchtungseinrichtung (10) und die mindestens eine zweite Beleuchtungseinrichtung (18) auf gegenüberliegenden Seiten der Messebene (12) angeordnet sind.

10. Farbmesssystem (2) nach einem der Ansprüche 1 bis 9,
**dadurch gekennzeichnet,**
**dass** das Farbmesssystem (2) ein Inline-Farbmesssystem ist.

11. Verfahren zur ortsaufgelösten spektralen Farbmessung einer Oberfläche, insbesondere einer strukturierten Oberfläche,
- bei dem eine erste ortsaufgelöste spektrale Farbmessung der Oberfläche unter einem ersten Beleuchtungswinkel durchgeführt wird,
- bei dem eine zweite ortsaufgelöste spektrale Farbmessung der Oberfläche unter einem zweiten Beleuchtungswinkel durchgeführt wird,
- bei dem die erste ortsaufgelöste spektrale Farbmessung und die zweite ortsaufgelöste spektrale Farbmessung verglichen werden, wobei eine Differenz zwischen Messpunkten der ersten ortsaufgelösten spektralen Farbmessung und korrespondierenden Messpunkten der zweiten ortsaufgelösten spektralen Farbmessung ermittelt wird, und
- bei dem kritische Messpunkte identifiziert werden, deren ermittelte Differenz einen Grenzwert überschreitet.

12. Verfahren nach Anspruch 11,
bei dem die erste ortsaufgelöste spektrale Farbmessung, die zweite ortsaufgelöste spektrale Farbmessung und/oder ein gemittelter Datensatz mit einem Musterdatensatz verglichen werden.

13. Verfahren nach Anspruch 11 oder 12,
bei dem die kritischen Messpunkte bei dem Vergleichen einer der ortsaufgelösten spektralen Farbmessungen mit einem Musterdatensatz nicht berücksichtigt werden.

14. Verfahren nach einem der Ansprüche 11 bis 13,
bei dem die erste ortsaufgelöste spektrale Farbmessung und die zweite ortsaufgelöste spektrale Farbmessung alternierend durchgeführt werden, insbesondere mit einer Wechselfrequenz von 100 bis 300.000 Hz, insbesondere mit einer Wechselfrequenz von 200 bis 100.000 Hz, bevorzugt mit einer Wechselfrequenz von 1.000 bis 10.000 Hz.

15. Verfahren nach einem der Ansprüche 11 bis 14,
bei dem ein oder mehr Messpunkte der jeweiligen ortsaufgelösten spektralen Farbmessung als Messintervall zusammengefasst werden.
